# EUROPEAN PATENT SPECIFICATION

(11) **EP 3 817 974 B1**
(45) Date of publication and mention of the grant of the patent: **11.10.2023**
(21) Application number: 19731773.8
(22) Date of filing: 24.06.2019
(51) Int. Cl.: B63B 27/30, B63B 27/14

(54) **A METHOD FOR THE USE IN OFFSHORE CREW TRANSFER**
VERFAHREN FÜR DEN EINSATZ BEIM OFFSHORE-TRANSFER VON BESATZUNGEN
PROCÉDÉ D'UTILISATION DANS UN TRANSFERT D'ÉQUIPAGE OFFSHORE

(30) Priority: 04.07.2018 EP 18181713
(43) Date of publication of application: 12.05.2021
(60) Divisional application: 23195284.7
(73) Proprietor: Ørsted Wind Power A/S, 7000 Fredericia (DK)
(72) Inventor: ROSTRØM, Morten Paranhos Perdomo Santos, 2920 Gentofte (DK); WINDOLF, Mikkel Haugaard, 2920 Gentofte (DK); JENSEN, Niels Agner, 2920 Gentofte (DK)
(74) Representative: AWA Denmark A/S
(86) International application number: PCT/EP2019/066719
(87) International publication number: WO 2020/007637

(56) References cited:
- DE-B3-102015 108 882
- US-A1- 2007 000 424
- US-A1- 2014 114 509

## Description

The present invention relates to a system for predicting vessel bow motion of a crew transfer vessel and a method for the use in offshore crew transfer when transferring a person between a crew transfer vessel and a structure. Documents DE 10 2015 108882 B3, US 2014/114509 A1 and US 2007/000424 A1 constitute relevant prior art.

The present invention takes it outset in the operation and service offshore wind farms, but is applicable on a wide range of other offshore operations. Such operations may necessitate service crew to be sailed to an offshore location by boat, referred to hereinafter as the crew transfer vessel. At the offshore location, the persons who are part of or form the service crew need to be transferred from the crew transfer vessel to a structure to perform the service. Also, equipment or cargo may need to be transferred. The structure is typically a fixed structure such as a wind turbine or a platform on a fixed foundation, but could also be a floating structure anchored or not. Likewise, the persons need to transfer back to a crew transfer vessel from the structure.

Because of the sea waves, be it local wind driven waves or sea swells coming from far away, the crew transfer vessel will be in motion and typically move with respect to the structure to or from which the transfer is to take place. Such relative motion poses a risk to the safe transfer of persons.

A normal countermeasure is to push the bow of the crew transfer vessel against the structure using the crew transfer vessel's propulsion and manoeuvring system to create friction between the bow and the structure. To cushion and increase friction the bow is typically fitted with a rubber cushion. If the sea waves are not too big, this will keep the bow in permanent engagement with the structure in the sense that there is no relative motion, which could endanger the safe transfer. If, however, the sea waves become too big, there is a risk of sudden slip of the engagement between the bow and the structure and a sudden rapid motion of the vessel bow along the structure be it upwardly or downwardly in a vertical direction, to the side or away from the structure.

Whether this risk for slipping exists for a given sea wave pattern, is currently the call of the skipper or other responsible person on the crew transfer vessel. If this call is made too conservatively, valuable time and resources are lost, because personnel are not transferred. Thus, service of e.g. a wind turbine may be delayed. Such a delay is generally not desired but since stronger winds generally produce larger waves, the service of a non-producing wind turbine may be delayed at the very times where production potentials are high, and may thus incur unnecessary additional losses.

On this background, it is the object of the present invention to increase the time periods where safe transfer between a crew transfer vessel and a structure may take place.

According to a first aspect of the invention, this object is achieved by a method according to claim 1.

According to a second aspect of the invention, the object is solved by a system according to claim 6.

Introducing a prediction system of this kind in a method of crew transfer allows the real time assessment of the bow motion risk in response to each individual data set produced by the wave detection device in relation to waves, and thus a continuous real time assessment of the risk of vessel slip beyond a certain threshold within the near future. This prediction will take place in real time based on each individual data set and will therefore be much more precise than the skipper's estimate, even if he is experienced. This, in turn, provides a safe time window during which safe transfer may take place. Furthermore, the prediction may yield a simple go or no-go result that can easily be presented and interpreted on the indicator to the person to be transferred and those assisting in the transfer.

According to a preferred embodiment of the first aspect of the invention the indicator is adapted to indicate a second prediction of vessel bow motion below a second bow motion threshold value within a second predetermined time period based on said prediction system, where said second bow motion threshold value is lower than said first bow motion threshold value and said second predetermined time period, and transferring the person only when said vessel bow motion is indicated to be below the second vessel bow motion threshold value within the second predetermined time period. This may open up a further window allowing distinction between times where less experienced persons may transfer, and times where only more experienced persons may transfer.

Preferably, according to a further preferred embodiment of the first aspect of the invention, a safety line is attached to the structure, and the attachment of the person to the safety line is not performed until said vessel bow motion is indicated to be below the first vessel bow motion threshold value within the first predetermined time period. This further increases safety, because the prediction and the indicator allows the person to be transferred only to be attached to the safety line once there is a sufficiently long period available for the transfer. There is thus little risk that the bow would slip, leaving the person hanging in the safety line in the middle of the transfer.

According to yet another preferred embodiment of the first aspect of the invention, the structure is a fixed structure. The motion of the crew transfer vessel is easier to predict with respect to a fixed structure, and therefor renders itself most useful, for such transfers. It is however not excluded that the structure could be a floating structure, e.g. an anchored platform or even another vessel.

According to a further preferred embodiment according to the first aspect of the invention, the prediction system comprises an adaptive algorithm, which is continuously trained during operation using input data sets from the wave detection device and from a bow motion detector. This constantly improves current prediction, and improves the quality of the predictions of the prediction system over time, thus increasing safety.

According to a preferred embodiment of the second aspect of the invention, the predictor is furthermore adapted to add new correlations of data sets indicative of sea wave patterns with said data sets indicative of sea wave patterns to said experienced correlations. In this way, better predictions of a specific vessel's behaviour will be achieved, in turn allowing more transfer opportunities to be indicated and more transfers to be performed. Accordingly, according to a further preferred embodiment of the second aspect of the invention, the system further comprises an indicator for indicating the result of said prediction.

According to a further preferred embodiment of the second aspect of the invention the predictor is adapted to further correlate the experience to a given location. Thus, not only the vessel's own response to waves in general may be factored in but also specific characteristics of wave patterns at a given location. Thus, for a wind farm in general, or even individual wind turbines thereof, an even better prediction is achieved. This would of course also be the case for other relevant structures, such as service platforms, oil rigs etc. positioned at a specific location.

According to yet a further adapted to output an indication of optimum angle of docking based on said prediction. This allows the skipper to dock the crew transfer vehicle at an angle to the structure predicted to minimize the risk of slipping above the predetermined thresholds.

The invention will now be described in greater detail based on nonlimiting exemplary embodiments and with reference to the drawings, on which:
Fig. 1 shows a crew transfer vessel pressed against an offshore structure,
Fig. 2 illustrates a wave pattern detected by the radar of the crew transfer vessel,
Fig. 3 schematically illustrates magnitude of bow displacement over time as detected by motion detection device on the crew transfer vessel,
Fig. 4 illustrates predicted bow displacement over time along with two level output signals for an indicator on board of the crew transfer vessel, and
Fig. 5 illustrates predicted bow displacement over time along with three level output signals for an indicator on board of the crew transfer vessel.

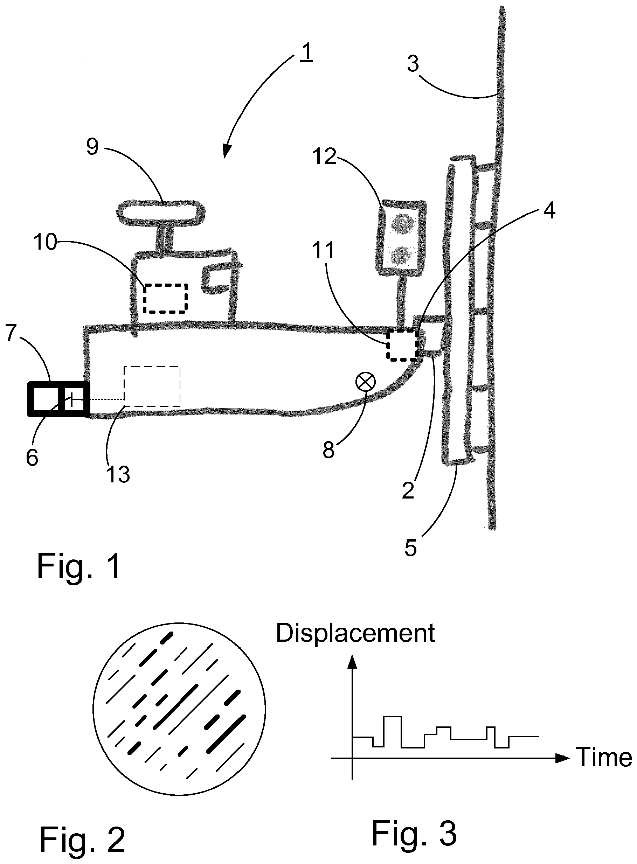

Turning first to Fig. 1 a crew transfer vessel 1 is shown with the bow 2 pressed against a structure 3, such as a monopile foundation of an offshore wind turbine, more specifically a buffer 4 at the bow 2 is pressing against vertical columns 5 protecting the entry ladder providing access to the structure 3. The crew transfer vessel 1 is not moored but merely pressed against the structure 3 by means of its propulsion and manoeuvring system, e.g. comprising engine 13, propeller 6, rudder, 7 and possibly bow propellers 8. Ideally, if pressed firmly enough against the structure, the bow will not move but form a pivotal point about which the crew transfer vessel 1 will still perform pitch, roll and yaw motions. However, in practice waves of a certain energy, e.g. depending on magnitude and velocity, and direction will still be able cause the bow 2 to move in sudden movements with respect to the structure 3, in the following referred to as slipping. Such sudden movements may pose a risk to persons, cargo or equipment if it happens in the transfer process between the crew transfer vessel and the structure or vice versa, even when strapped in harness and attached to security lines attached to the structure 3. The present invention reduces this risk by making qualified predictions on when and for how long such slipping is unlikely, and conversely on when such slipping is imminent.

The basis for this prediction is the continuous series data sets recorded by a wave detection device 9 of the crew transfer vessel 1, such as an x-band radar. As an alternative to radar for remote detection of waves, other means such as LIDAR or other laser ranging, microwave detection or the like could be used. In the following explanation of preferred embodiments the use of a radar will be assumed, but the invention is not limited thereto. These data sets represent sea wave patterns filtered out of the returned radar signals from the radar 9, as exemplified in Fig. 2. These data sets are fed to a predictive algorithm running on a computer 10, preferably located on the crew transfer vessel 1. The predictive algorithm is also fed with continuous data sets indicating the bow motion of the crew transfer vessel 1. The bow motion may be detected using a bow motion detector 11, such as an accelerometer, at the bow 2, a fine resolution GNSS receiver or any other suitable detector.

The predictive algorithm is preferably a machine learning algorithm trained to correlate detected wave patterns, based on the data sets from the radar, and the data sets indicating the bow motion, recorded during prior crew transfer operations and/or training sessions. When properly trained, the predictive algorithm will be able to output a simple result indicative of whether within a predetermined duration from a detected sea wave pattern, the bow 2 of the crew transfer vessel 1 will experience slipping above a certain threshold or not. This, in turn, may serve as a readily understandable indication to persons to be transferred and those assisting them that transfer is now possible without the risk of the bow 2 slipping, so that persons are only transferred during such indication. Typically, a 30 second time interval is sufficient for the transfer including the attachment of the person to security lines, so the predictive algorithm may set an indicator 12 to "go" or "green" if no slipping above e.g. 30 cm will take place within the next 30 seconds. If not, "no-go" or "red" may be indicated instead. For psychological reasons, an indication of "no-go" is preferred as addition to "go", but in principle only the indication of one or the other suffices. Most people are familiar with the concept of traffic lights, and it is therefore preferred to simply use red and green lights on the indicator 12 to signal "go" or "no-go". The analogy will also implicitly be used in the following description.

The duration of bow motions below a given threshold, i.e. the 30 seconds mentioned above, is selected to be so long that there is sufficient time to attach the person in harness to the safety line(s) attached to the structure 3. There is thus no risk that the bow 2 of the crew transfer vessel 1 suddenly falls away below the person leaving him suspended from the safety line.

Since, however, all persons to be transferred are not equally trained, experienced, and agile it may be preferably not just to have the above mentioned simple "go" and "no go" indication, but also have an intermediate level for better trained and more experienced persons. Since such persons will generally be able to cope better with slipping of the bow 2 and perform the transfer more quickly, they could be allowed to transfer when the risk of bow 2 slipping below a higher threshold, which may generally be more likely and therefore have a longer duration.

So if a first threshold is set at e.g. 60 cm and this is not going to be exceeded for say 30 or 15 seconds, or possibly even a shorter duration the indicator 12 could indicate "possible" or "yellow", until prediction yields below 30 cm for the next 30 second and goes "green" or, as the case may be, goes "red" because both thresholds are predicted to be exceeded within the duration. So, the transfer period is extended, because distinction can be made between good conditions i.e. "yellow condition", where experienced persons may transfer, and very good conditions. i.e. "green condition" where also less experienced persons may transfer. Also in this embodiment of the invention a presentation similar to a traffic light is preferred.

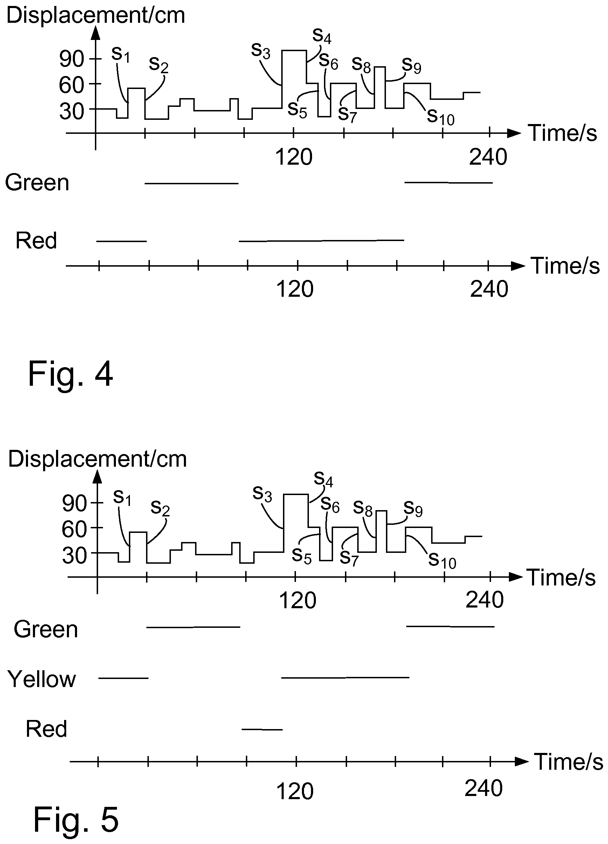

This can be seen by comparison between figs. 4 and 5, illustrating the above predictions of slips and resulting indications with thresholds of 30 cm and 60 cm for "green condition" and "yellow condition", respectively, within 30 second duration.

Turning first to Fig. 4, a predicted bow displacement over a 240 s time interval from a given point in time t=0 is illustrated. A number of significant slips s₁-s₁₀ up and down have been predicted, significant meaning larger than 30 cm. As can be seen, the prediction at t=0 yields two slips s₁ and s₂ larger than 30 cm within the next 30 s and the indication is thus "red". At the time of the slip s₁, the next predicted slip s₂ is still predicted within 30 s and the indication would remain "red". Thereafter, no slips are predicted until the rather big slip s₃ and indication would remain "green" until 30 s before the predicted slip s₃. After s₂, a long sequence of significant slips s₄-s₁₀ are predicted and the indication would remain red until after the slip s₁₀. in this respect, it should be noted that with each new data set from the radar 9 and from the bow motion detector 11 the prediction is updated, and all the above "would be's" may change as prediction may improve as they approach in time. Thus, approximately after the approximately 40 s when the slip s₁ has occurred predictions may have changed so s₂ is predicted to be below the threshold and the indication may already then change to "green". As it is all about prediction, it may even be that the predictions for both s₁ and s₂ change before the time when s₁ is initially predicted to occur and indication is set to "green" (or "red") before then.

Turning now to Fig. 5, the same situation at t=0 is considered for an indication using two thresholds of 30 cm and 60 cm, respectively. Here, as can be seen, only the largest slip s₃ would yield a "red" indication. The slips s4-s10 are predicted to be between 30 cm and 60 cm and thus yield a "yellow" condition and an indication thereof. The duration of the time of predicted "red" condition is substantially reduced as compared to Fig. 4.

it should be emphasized that the above thresholds and time period are merely examples for illustration of the invention

As indicated above, prediction is constantly updated based on new radar data sets and bow motion data sets, and the predictive algorithm constantly learns more about the crew transfer vessels behaviour when pressed against a structure 3. The mere pressing of the crew transfer vessel 1 against a structure makes the prediction difficult, and even if the response of the vessel 1 to wind, waves current etc. in general is known to some extent e.g. when floating free, the pressing against a structure 3 makes exact modelling of the response in that situation impossible. A predictive algorithm has been found to yield useful results, without exact modelling of each and every situation that may be experienced when pressed against a structure 3 even based solely on radar data and bow motion data.

Prediction may, however, be improved if the predictive algorithm is trained with additional input parameters. One such parameter could be the force with which the crew transfer vessel 1 is pressed against structure 3, e.g. based on utilized engine power or thrust. Another such parameter could be the geographic location of the crew transfer vessel 1. This would allow the predictive algorithm to also learn or incorporate local factors typical for the location, such as wind, waves, swells, current etc. Alternatively, the algorithm could be specifically trained for specific locations, so that an algorithm trained for the location of the transfer could be utilized. This could be a specific training for a specific structure (monopile, jacket, floating foundation or any other structures known to a person skilled in the art) or a more general training for a larger area such as an offshore wind farm.

Furthermore, already while approaching the structure, the predictions based on prior knowledge of wave patterns may be put into use. For instance a prediction of "dockability" may be forecast. So if predictions by the prediction system yield that a high risk of slipping exists, this could be indicated to the skipper, thus also relieving him of the decision on whether to dock or not.

Also, since the risk of slipping depends on the orientation of the crew transfer vessel 1 with respect to the wave patterns angle, the prior knowledge of the response of the crew transfer vessel 1 to wave patterns, the prediction system may give an indication to the skipper as to how to approach and dock, e.g. the optimal angle for a given wave pattern to push the crew transfer vessel 1 against the structure at, i.e. an angle yielding the best predictions for slipping under the predetermined thresholds.

As will be understood, according to the invention, the prediction and indication system as described above is used in a method where the person is only transferred when said vessel bow motion is indicated to be below the first vessel bow motion threshold value within the first predetermined time period.

## Claims

1. A method for the use in offshore crew transfer when transferring a person between a crew transfer vessel (1) and a structure (3) or vice versa where
the crew transfer vessel (1) comprises a propulsion and manoeuvring system (6, 7, 8, 13),
a wave detection device (9) adapted for detecting sea waves,
a prediction system (10, 11) for predicting the amount of vessel slip between the vessel bow (2) and the structure (3) in response to sea waves detected by said wave detection device (9),
an indicator (12) adapted to indicate a prediction of vessel slip below a first slip threshold value within a first predetermined time period based on said prediction system, said method comprising the steps of:
pressing said crew transfer vessel (1) with its bow (2) against said structure (3) using said propulsion and manoeuvring system (6, 7, 8, 13),
detecting said sea waves using said wave detection device (9),
based on said detected sea waves, predicting using said prediction system (10, 11) whether vessel slip will be below the first slip threshold value within the first predetermined time period, and if so indicating this using the indicator (12), and
transferring the person only when said vessel slip is indicated to be below the first vessel slip threshold value within the first predetermined time period.

2. A method according to claim 1, wherein the indicator (12) is adapted to indicate a second prediction of vessel slip below a second slip threshold value within a second predetermined time period based on said prediction system, where said second slip threshold value is lower than said first slip threshold value, and transferring the person only when said vessel slip is indicated to be below the second vessel slip threshold value within the second predetermined time period.

3. A method according to any one of claims 1 or 2 wherein a safety line is attached to the structure (3), and the attachment of the person to the safety line is not performed until said vessel slip is indicated to be below the first vessel slip threshold value within the first predetermined time period.

4. A method according to any one of the preceding claims wherein the structure (3) is a fixed structure.

5. A method according to any one of the preceding claims wherein the prediction system comprises an adaptive algorithm which is continuously trained during operation using input data sets from the wave detection device (9) and from a bow motion detector (11).

6. A system for predicting vessel bow motion and continuous real time assessment of vessel slip beyond a certain threshold within the near future of a crew transfer vessel (1) comprising a propulsion and manoeuvring system (6, 7, 8, 13), a wave detection device (9), and a bow motion detection system (11), said system comprising
a predictor (10) adapted to receive data sets indicative of a sea wave pattern from said wave detection device (9), to receive data sets indicative of vessel bow motion and to correlate said data sets indicative of sea wave patterns with said data sets indicative of vessel bow motion, so as to be able to make predictions based on experienced correlation between said data sets indicative of sea wave patterns and data sets indicative of vessel bow motion,
wherein said predictor is further adapted to, based on said prediction, output a prediction of the amount of vessel slip between the vessel bow (2) and a structure (3) to be experienced within a first time period after the receipt of a data set indicative of a sea wave pattern from said wave detection device (9), so as to provide a safe time window during which vessel slip will be below a first slip threshold value and during which safe transfer of a person between the crew transfer vessel (1) and the structure (3) or vice versa may take place.

7. A system according to claim 6, wherein the predictor is furthermore adapted to add new correlations of data sets indicative of sea wave patterns with said data sets indicative of sea wave patterns to said experienced correlations.

8. A system according to any one of claims 6 or 7, further comprising an indicator (12) for indicating the result of said prediction.

9. A system according to claim 6, wherein said predictor is adapted to further correlate the experience to a given location.

10. A system according to claim 6, further adapted to output an indication of optimum angle of docking based on said prediction.

## Patentansprüche

1. Verfahren für den Einsatz beim Offshore-Transfer von Besatzungen beim Transferieren einer Person zwischen einem Besatzungstransferschiff (1) und einer Struktur (3) oder umgekehrt, wobei
das Besatzungstransferschiff (1) Folgendes umfasst: ein Antriebs- und Manövriersystem (6, 7, 8, 13),
eine Wellendetektionsvorrichtung (9), angepasst zum Detektieren von Meereswellen,
ein Vorhersagesystem (10, 11) zum Vorhersagen eines Betrags von Schiffs-Slip zwischen dem Schiffsbug (2) und der Struktur (3) in Reaktion auf durch die Wellendetektionsvorrichtung (9) detektierten Meereswellen,
einen Indikator (12), angepasst zum Anzeigen einer Vorhersage von Schiffs-Slip unter einem ersten Slip-Schwellenwert innerhalb einer ersten vorbestimmten Zeitspanne, basierend auf dem Vorhersagesystem, wobei das Verfahren die folgenden Schritte umfasst:
Drücken des Besatzungstransferschiffes (1) mit seinem Bug (2) gegen die Struktur (3) unter Verwendung des Antriebs- und Manövriersystems (6, 7, 8, 13),
Detektieren der Meereswellen unter Verwendung der Wellendetektionsvorrichtung (9),
basierend auf den detektierten Meereswellen, Vorhersagen, unter Verwendung des Vorhersagesystems (10, 11), ob Schiffs-Slip innerhalb der ersten vorbestimmten Zeitspanne unter dem ersten Slip-Schwellenwert sein wird, und wenn das der Fall ist, Anzeigen dessen unter Verwendung des Indikators (12), und
Transferieren der Person nur, wenn angezeigt wird, dass der Schiffs-Slip innerhalb der ersten vorbestimmten Zeitspanne unter dem ersten Schiffs-Slip-Schwellenwert ist.

2. Verfahren nach Anspruch 1, wobei der Indikator (12) angepasst ist zum Anzeigen einer zweiten Vorhersage von Schiffs-Slip unter einem zweiten Slip-Schwellenwert innerhalb einer zweiten vorbestimmten Zeitspanne basierend auf dem Vorhersagesystem, wobei der zweite Slip-Schwellenwert niedriger als der erste Slip-Schwellenwert ist, und
Transferieren der Person nur, wenn angezeigt wird, dass der Schiffs-Slip innerhalb der zweiten vorbestimmten Zeitspanne unter dem zweiten Schiffs-Slip-Schwellenwert ist.

3. Verfahren nach einem der Ansprüche 1 oder 2, wobei eine Sicherheitsleine an der Struktur (3) befestigt ist und wobei die Befestigung der Person an der Sicherheitsleine erst durchgeführt wird, wenn angezeigt wird, dass der Schiffs-Slip innerhalb der ersten vorbestimmten Zeitspanne unter dem ersten Schiffs-Slip-Schwellenwert ist.

4. Verfahren nach einem der Ansprüche, wobei die Struktur (3) eine feste Struktur ist.

5. Verfahren nach einem der vorhergehenden Ansprüche, wobei das Vorhersagesystem einen adaptiven Algorithmus umfasst, der während des Betriebs kontinuierlich unter Verwendung von Eingabedatenmengen von der Wellendetektionsvorrichtung (9) und von einem Bugbewegungsdetektor (11) trainiert wird.

6. System zum Vorhersagen von Schiffsbugbewegung und zur kontinuierlichen Echtzeitbewertung von Schiffs-Slip unterhalb eines gewissen Schwellenwerts innerhalb der nahen Zukunft eines Besatzungstransferschiffes (1), umfassend ein Antriebs- und Manövriersystem (6, 7, 8, 13), eine Wellendetektionsvorrichtung (9) und ein Bugbewegungsdetektionssystem (11), wobei das System Folgendes umfasst:
einen Prädiktor (10), angepasst zum Empfangen von Datenmengen, die indikativ für ein Meereswellenmuster sind, von der Wellendetektionsvorrichtung (9), zum Empfangen von Datenmengen, die indikativ für Schiffsbugbewegung sind, und zum Korrelieren der Datenmengen, die indikativ für Meereswellenmuster sind, mit Datenmengen, die indikativ für Schiffsbugbewegung sind, um in der Lage zu sein, Vorhersagen basierend auf einer erfahrenen Korrelation zwischen den Datenmengen, die indikativ für Meereswellenmuster sind, und Datenmengen, die indikativ für Schiffsbugbewegung sind, zu treffen,
wobei der Prädiktor ferner angepasst ist zum, basierend auf der Vorhersage, Ausgeben einer Vorhersage für den Betrag von Schiffs-Slip zwischen dem Schiffsbug (2) und einer Struktur (3), die innerhalb einer ersten Zeitspanne nach dem Empfang einer Datenmenge, die indikativ für ein Meereswellenmuster ist, von der Wellendetektionsvorrichtung (9), zu erfahren ist, um ein sicheres Zeitfenster bereitzustellen, während dessen Schiffs-Slip unter einem ersten Slip-Schwellenwert ist, und während dessen sicherer Transfer einer Person zwischen dem Besatzungstransferschiff (1) und der Struktur (3) oder umgekehrt stattfinden kann.

7. System nach Anspruch 6, wobei der Prädiktor ferner angepasst ist zum Hinzufügen neuer Korrelationen von Datenmengen, die indikativ für Meereswellenmuster sind, mit den Datenmengen, die indikativ für Meereswellenmuster sind, zu den erfahrenen Korrelationen.

8. System nach einem der Ansprüche 6 oder 7, ferner umfassend einen Indikator (12) zum Anzeigen des Ergebnisses der Vorhersage.

9. System nach Anspruch 6, wobei der Prädiktor angepasst ist zum weiteren Korrelieren der Erfahrung mit einem gegebenen Ort.

10. System nach Anspruch 6, ferner angepasst zum Ausgeben einer Anzeige eines optimalen Andockwinkels basierend auf der Vorhersage.

## Revendications

1. Procédé destiné au transfert d'équipage en mer lors du transfert d'une personne entre un navire de transfert d'équipage (1) et une structure (3) ou vice versa,
le navire de transfert d'équipage (1) comprenant un système de propulsion et de manoeuvre (6, 7, 8, 13),
un dispositif de détection de vague (9) conçu pour détecter les vagues de la mer,
un système de prévision (10, 11) destiné à prévoir la quantité de glissement de navire entre la proue de navire (2) et la structure (3) en réponse aux vagues de la mer détectées par ledit dispositif de détection de vague (9),
un indicateur (12) conçu pour indiquer une prévision de glissement de navire en dessous d'une première valeur de seuil de glissement dans une première période de temps prédéfinie basée sur ledit système de prévision, ledit procédé comprenant les étapes consistant à :
presser ledit navire de transfert d'équipage (1) avec sa proue (2) contre ladite structure (3) à l'aide dudit système de propulsion et de manoeuvre (6, 7, 8, 13),
détecter lesdites vagues de la mer à l'aide dudit dispositif de détection de vague (9),
sur la base desdites vagues détectées, prévoir à l'aide du système de prévision (10, 11) si le glissement de navire sera inférieur à la première valeur de seuil de glissement au cours de la première période de temps prédéfinie et, si c'est le cas, l'indiquer à l'aide de l'indicateur (12), et
transférer la personne uniquement lorsque ledit glissement de navire est indiqué comme étant inférieur à la première valeur de seuil de glissement de navire au cours de la première période de temps prédéfinie.

2. Procédé selon la revendication 1, l'indicateur (12) étant conçu pour indiquer une seconde prévision de glissement de navire en dessous d'une seconde valeur de seuil de glissement dans une seconde période de temps prédéfinie basée sur ledit système de prévision, ladite seconde valeur de seuil de glissement étant inférieure à ladite première valeur de seuil de glissement, et
transférer la personne uniquement lorsque ledit glissement de navire est indiqué comme étant inférieur à la seconde valeur de seuil de glissement de navire au cours de la seconde période de temps prédéfinie.

3. Procédé selon l'une quelconque des revendications 1 ou 2, une ligne de sécurité étant attachée à la structure (3), et la personne n'étant pas attachée à la ligne de sécurité tant que ledit glissement de navire n'est pas indiqué comme étant inférieur à la première valeur de seuil de glissement de navire au cours de la première période de temps prédéfinie.

4. Procédé selon l'une quelconque des revendications précédentes, la structure (3) étant une structure fixe.

5. Procédé selon l'une quelconque des revendications précédentes, le système de prévision comprenant un algorithme adaptatif qui est continuellement entraîné pendant le fonctionnement à l'aide d'ensembles de données d'entrée provenant du dispositif de détection de vague (9) et d'un détecteur de mouvement de proue (11).

6. Système de prévision de mouvement de proue de navire et d'évaluation continue en temps réel de glissement de navire au-delà d'un certain seuil dans un avenir proche d'un navire de transfert d'équipage (1) comprenant un système de propulsion et de manoeuvre (6, 7, 8, 13), un dispositif de détection de vague (9) et un système de détection de mouvement de proue (11), ledit système comprenant un dispositif de prévision (10) conçu pour recevoir des ensembles de données indiquant un modèle de vague de mer à partir dudit dispositif de détection de vague (9), pour recevoir des ensembles de données indiquant le mouvement de proue de navire et pour corréler lesdits ensembles de données indiquant des modèles de vague de mer avec lesdits ensembles de données indiquant le mouvement de proue de navire, de sorte à pouvoir faire des prévisions basées sur une corrélation expérimentée entre lesdits ensembles de données indiquant des modèles de vague de mer et des ensembles de données indiquant le mouvement de proue de navire, ledit dispositif de prévision étant en outre conçu pour, sur la base de ladite prévision, produire une prévision de la quantité de glissement de navire entre la proue de navire (2) et une structure (3) qui sera expérimentée dans une première période de temps après la réception d'un ensemble de données indiquant un modèle de vague de mer provenant dudit dispositif de détection de vague (9), de sorte à fournir une fenêtre temporelle sûre pendant laquelle le glissement de navire sera inférieur à une première valeur de seuil de glissement et pendant laquelle le transfert sûr d'une personne entre le navire de transfert d'équipage (1) et la structure (3) ou vice versa peut avoir lieu.

7. Système selon la revendication 6, le dispositif de prévision étant en outre conçu pour ajouter auxdites corrélations expérimentées de nouvelles corrélations d'ensembles de données indiquant des modèles de vague de mer avec lesdits ensembles de données indiquant des modèles de vague de mer.

8. Système selon l'une quelconque des revendications 6 ou 7, comprenant en outre un indicateur (12) pour indiquer le résultat de ladite prévision.

9. Système selon la revendication 6, ledit dispositif de prévision étant conçu pour corréler davantage l'expérience à un emplacement donné.

10. Système selon la revendication 6, conçu en outre pour fournir une indication de l'angle optimal d'accostage sur la base de ladite prévision.
